(19) Europäisches Patentamt
European Patent Office
Office européen des brevets

(11) **EP 2 903 182 B1**

(12) **EUROPEAN PATENT SPECIFICATION**

(45) Date of publication and mention
of the grant of the patent:
**08.08.2018 Bulletin 2018/32**

(21) Application number: **14290012.5**

(22) Date of filing: **30.01.2014**

(51) Int Cl.:
***H04B 10/079*** (2013.01)

(54) **Diagnosing faults in optical networks**

Fehlerdiagnose in optischen Netzwerken

Diagnostic de pannes dans des réseaux optiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2015 Bulletin 2015/32**

(73) Proprietor: **Alcatel Lucent
91620 Nozay (FR)**

(72) Inventors:
• **Dupuis, Nicolas
2018 Antwerpen (BE)**

• **Meersman, Stijn
2018 Antwerpen (BE)**

(74) Representative: **Nokia Bell Patent Attorneys
Copernicuslaan 50
2018 Antwerp (BE)**

(56) References cited:
**US-A1- 2003 030 862     US-A1- 2006 013 585
US-A1- 2007 237 520     US-A1- 2009 129 773**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The invention relates to the field of Passive Optical Networks, more specifically to the diagnosing of faults occurring in the optical links connecting an Optical Line Termination or OLT with Optical Network Terminals or ONTs typically located at end user premises.

**Background of the Invention**

With the uprising market development of IPTV or Internet Protocol television solutions, Video-On-Demand or Triple-play services, high throughput and availability is expected from the data network connecting the service provider to the customer.

To deliver these high throughputs optical networks may be used, more specifically Passive Optical Networks or PONs. In a PON, an optical line termination or OLT at the provider's side is connected with several optical network terminals or ONTs at the customer's side by optical components such as splitters, connectors and optical fibres. While the optical fibre technology provides high throughputs, the use of passive components ensure a high availability.

To ensure a good Quality of Service or QoS, it is important to detect faulty optical links, i.e., the link between the OLT and an ONT, both at installation time and during operation. A known metric to diagnose a faulty optical link or to monitor the overall performance of an optical link is the received optical power at the ONT. Several solutions exist to obtain the received optical power and use it for diagnosing a faulty optical link.

A first solution is Embedded Optical Time-Domain Reflectometry or eOTDR whereby power drops are estimated within the PON topology. eOTDR may be performed at the transceiver in an OLT. Thereby, the eOTDR device is embedded as part of the transceiver. The transceiver is then provided as a pluggable module also referred to as a Small Form-factor Pluggable transceiver or, shorter, SFP. As the data service is continued during the eOTDR, it is a non-intrusive technique. However, as eOTDR is based on a projection of all the reflected light towards the OLT side, major difficulties arise when investigating which optical link is actually affected by a power drop because, when splitters are used, it is not possible to assess from which optical link after the splitter the light is reflected. Moreover, only reflected light and thus power is monitored making it difficult to estimate which part of the power is transmitted towards each available ONT. Another drawback is that due to technological limitations, eOTDR is difficult to use in practice. For example, dust at the near-end connectors can introduce some high reflections, making the interpretation not feasible because of reflective blindness.

A second solution is to measure the actual received optical power at the ONT, i.e., at the fibre end. This may be done by a handheld power meter providing an absolute measurement that informs a field technician about the amount of optical received power. If the received power is low, a faulty optical link is suspected. However, this device cannot tell you where and why. Another drawback is that such equipment cannot give clues about a good or optimal value for the optical received power. Indeed, depending on the topology, i.e., depending on the amount of optical splitters, the connectors or the distance to the OLT, attenuation of the optical received power is significantly affected and reduced. With a handheld device, the received optical power at other fibre ends cannot be measured to compare with or extensive human collaboration would be required to do so. Moreover, delays in terms of the time at which measurements at different fibre ends are performed, make the comparison less reliable. A further disadvantage is that the use of a power meter is an intrusive technique, i.e., the data service is interrupted during the power measurement.

A third solution is to obtain the received optical power in an ONT by the monitoring of physical layer or PHY parameters. In this case, a centrally installed network analyser collects the optical received power from one or more ONT's over the PON network itself. This kind of data collection is for example inherently present in GPON or Gigabit-capable Passive Optical Networks. Although this technique offers a true end-to-end power measurement including the path losses in the transceiver of the ONT, it still does not allow diagnosing a fault in one of the optical links as there is no information available on what is a good and what is a bad value for the optical received power.

In the publication US20090129773A1 a method and apparatus is disclosed for isolating a location of a fault in an optical network. It uses communications traffic signals and network nodes to determine excess power losses without interrupting service or requiring additional external test equipment. A transmit optical network node is configured to measure the transmit power of multiple wavelengths of a transmitted optical signal. A receive optical network node is configured to measure the receive power of the same multiple wavelengths. Power differentials of the transmit and receive optical power for each wavelength are calculated. Optical power losses as a function of the optical path distance between the transmit and receive optical network nodes are also determined. The obtained data is used to isolate the location of a fault in the passive optical network based on the differences between the optical power losses of the multiple wavelengths thereby reducing troubleshooting time and network downtime.

It is an object of the present invention to alleviate at least some of the above drawbacks and to offer a way to diagnose faults in an PON in a non-intrusive way.

## Summary of the Invention

This object is achieved, in a first aspect, by a device for diagnosing faults in a passive optical network or PON. This PON connects an optical line termination or OLT with optical network terminals or ONTs. The device is further configured to execute the following steps:

- collecting power values indicative for an amount of signal power lost or received in respective optical links connecting said ONTs with said OLT;
- determining a subset of said power values indicative for a respective subset of said respective optical links providing a best performance in received or lost power;
- determining a reference power value from said subset;
- marking an optical link in said PON as faulty if a power value for said optical link is worse than said reference power value.

The power values may be collected from the ONTs as a physical layer parameter or may be derived from physical layer parameters. A power value is an indication of the loss in power over an optical link, i.e. the optical path from the OLT to an ONT. More than one power value may be collected from a single ONT, for example at different times. A power value may be an absolute value, for example specified in the power ratio in decibels of the measured power referenced to one milliwatt or dBm, or a relative value, for example specified in decibels or dBs. The determined subset then represents the optical links with the least loss in power or the highest received optical power, thereby serving as a reference for what is considered as a healthy optical link. As the subset of power values may not be identical due to, for example, statistical spreading, the reference power value is determined from the subset and serves as a threshold or reference to either consider an optical link as healthy or faulty. When considering absolute power values, an optical link is considered worse than this reference if the received signal power on this optical link is below the reference power value, i.e., below a reference received signal power. When considering relative signal power or thus the loss in signal power over an optical link, the link is considered worse than this reference if the lost signal power is above the reference power value, i.e., above the reference loss in signal power.

It is an advantage that an optical link can be considered as healthy or faulty on the basis of power values alone. Also variations in the measurements are taken into account by the clustering of power values in a subset of best performing optical links.

Optionally, the device is further configured to execute the following step before the determining:

- precompensating the power values for differences in topology between the respective optical links thereby obtaining precompensated power values for the respective optical links.

The optical links may have a known different path loss determined by a known physical difference in the optical links such as for example different splitters, different connectors, different cable length, i.e., a difference in topology of the PON. The precompensating then removes the effect of this difference in topology.

It is an advantage that optical links with different topology can be compared and identified as faulty even though the collected power values are not directly comparable.

Advantageously, the precompensating comprises:

- subtracting from the power values insertion losses induced by the respective optical links.

As it is a passive optical network, each component in the optical link and thus the optical link as such will cause a drop in signal power or thus a power drop. The subtracting of the insertions losses, i.e., the path loss in the optical link, results in an updated or precompensated power value representing the power value at the side of the transmitter or the OLT. If absolute power values are used, the precompensated value will thus be the expected transmitted power. If relative power values are used, the precompensated value will reflect the residual loss not caused by the foreseen difference in topology.

As insertion losses can be easily obtained for the components in the PON, it provides an easy way for the precompensation of the power values.

If a difference in topology comprises a difference in length of the respective optical links, then the subtracting may comprise:

- subtracting from the power values attenuations in power caused by the length of the respective optical links.

Typically, for an optical fibre, the attenuation in power is known as a function of the length of the fibre. Therefore, based on the length of the fibre, the insertion loss caused by the fibre itself is known.

If the PON comprises splitters and the differences in topology comprise a difference in a number of these splitters or splitter ratios of said splitters within the respective optical links, the subtracting may further comprise:

- subtracting from said power values attenuations in power caused by said splitter ratios of said splitters in said respective optical links.

A splitter will divide a signal on an optical fibre onto several different optical fibres towards the ONTs. Thereby the signal power will be divided onto the connected optical fibres according to a splitter ratio. Therefore, the precompensating for the splitters of an optical link may be done by taking into account the splitter ratios along the optical link allowing the comparison of optical links comprising different splitters and/or splitter ratios.

If respective optical links comprise connectors and if the differences in topology comprise a difference in a number of connectors and/or a type of connecters; then the subtracting may further comprise:

- subtracting from the power values attenuations in power caused by the number of connectors and type of connectors in the respective optical links.

Each connector in an optical link will cause an attenuation of the signal power which may be dependent on the type of connector. By taking into account the power drops caused by connectors, power values from links with different types of connectors or a different number of connectors can be compared.

According to a preferred embodiment, the determining a reference value comprises:

- calculating a maximum-likelihood value of the subset of the power values minus a confidence value for this maximum-likelihood value.

A confidence value is a scalar value that provides a measure of the disparity between data samples, i.e., power values. This confidence value is made to define a distance or threshold with respect to the maximum-likelihood. If a power value is within this distance, it may be assumed that a data sample is statistically similar to the max-likelihood value.

The use of global statistical estimators, i.e., the maximum-likelihood value and the confidence value, provide a reliable way to determine the reference power value from power values that are affected with different uncorrelated accuracies such as measurement accuracy of the power value itself, accuracy in estimation of the statistical model and accuracy in the representation of the topology for the precompensation.

According to an embodiment, the device is further configured to execute the following step:

- marking a splitter in the optical link as faulty if first power values of the power values corresponding to first optical lines of the respective optical lines all comprising the splitter are all worse than the reference power value.

Indeed, if a splitter is faulty, all optical links comprising this splitter will exhibit a power value worse than the reference power value.

According to a second aspect, a method for diagnosing faults in a passive optical network or PON is provided. This PON connects an optical line termination or OLT with optical network terminals or ONTs. The method further comprises:

- collecting power values indicative for an amount of signal power lost or received in respective optical links connecting the ONTs with the OLT;
- determining a subset of the power values indicative for a respective subset of the respective optical links providing a best performance in received or lost power;
- determining a reference power value from the subset;
- marking an optical link in the PON as faulty if a power value for the optical link is worse than the reference power value.

According to a third aspect, the invention relates to a computer program product comprising computer-executable instructions for performing the method according to the second aspect when the program is run on a computer.

According to a fourth aspect, the invention relates to a computer readable storage medium comprising the computer program product according to the third aspect.

According to a fifth aspect, the invention relates to a data processing system programmed for carrying out the method according to the second aspect.

**Brief Description of the Drawings**

Fig. 1 illustrates a Passive Optical Network comprising an OLT and ONTs whereby a device according to an embodiment of the invention collects power values from the OLT; and

Fig. 2 illustrates steps executed by a device according to an embodiment of the invention; and

Fig. 3 shows the distribution of measurements of the received signal power or RxPower and the clustering of measurements in order to derive a reference power value according to an embodiment of the invention; and

Fig. 4 illustrates steps executed by a device according to an embodiment of the invention whereby power values are precompensated before determining a reference power value.

**Detailed Description of Embodiment(s)**

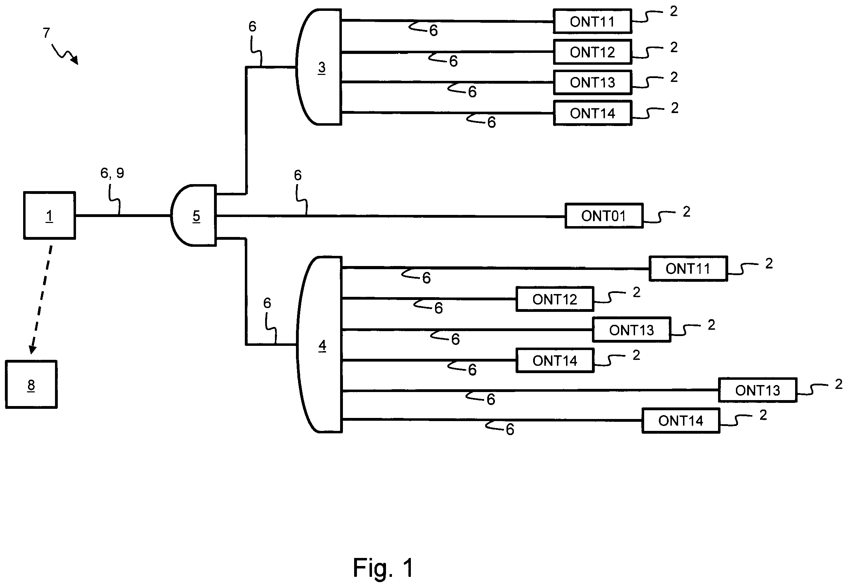

Fig. 1 illustrates an exemplary topology of a Passive Optical Network or PON 7. Different Optical Network Terminals or ONTs 2 are connected to an Optical Line Termination or OLT 1. Typically such a PON 7 is used for providing high bandwidth data services by a data service provider to customers. The OLT 1 is located at the side of the service provider and the ONTs 2 are located near the different end user premises, i.e. the customers. The PON 7 uses optical fibres 6 to transport data modulated onto light signals from the OLT 1 to the ONTs 2 and back. The OLT 1 and ONTs 2 comprise transceivers for respectively transmitting and receiving light signals having data modulated thereon onto and from the connected optical fibre.

In order to save on cable and installation cost, the topology of the PON 7 is tree shaped, i.e. starting with a single optical fibre 9 at the OLT 1 and then dividing the data signal on this fibre onto several different optical fibres by splitters 5, 3 and 4. As the network is passive, i.e., the transmitted signals are not amplified by active components along the optical path between the OLT 1 and ONTs 2, the splitters exhibit a splitter ratio. By a splitter, the optical power of a signal coming from the OLT 1 is divided over the fibres connected to the splitter according to the splitter ratio. The optical path that a signal follows between the OLT 1 and a specific ONT 2 defines an optical link. For example, the optical path between OLT 1 and ONT11 in Fig. 1 defines an optical link OLT-ONT11. The same applies to the other ONTs 2.

The optical power of an optical signal received by an ONT 2 will be lower than the optical power originally transmitted by the OLT 1 because of the attenuations caused by the different components within the optical link. Components typically causing attenuations are for example the optical fibre 6, the splitters 3-4-5, connectors and the transceivers themselves.

Fig. 1 also illustrates a device 8 for diagnosing faults within the PON 7. The device may execute several steps according to the embodiments set out below in order to diagnose faults occurring in the PON 7. In order to perform the diagnosing, the device 8 communicates with the OLT 1, for example over a network of the service provider. The device 8 may also be embedded within the OLT 1 whereby all steps according to the below embodiments are executed by the OLT 1 itself. The OLT 1 is then the device 8. The device 8 may also diagnose multiple PONs 7 by establishing a data connection with different OLTs 1 at the same time.

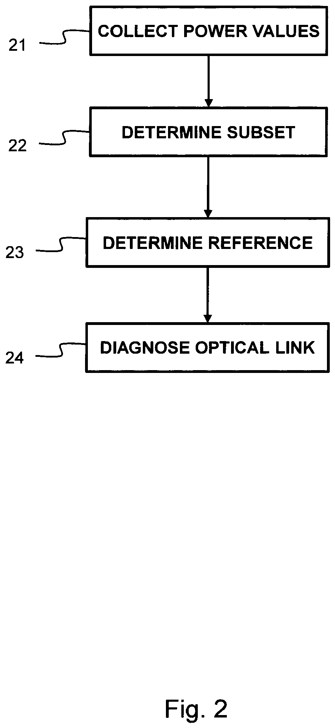

Fig. 2 illustrates steps executed by the device 8 in order to diagnose faults in the PON 7 according to an embodiment of the invention.

In a first step 21, the device 8 collects power values of the signals received in ONTs 2. A power value is thereby indicative for an amount of signal power lost or received in an optical link connecting the OLT 1 with an ONT 2 by an optical path. The device 8 may for example receive these power values directly from the OLT 1 as a physical layer parameter. In this case, the power value is measured by the ONT's transceiver as the optical received power or RxPower. The power value is then sent as a physical layer parameter embedded in a returning data packet from the ONT 2 to the OLT1. This way of collecting power values by an OLT 1 and thus by the device is for example supported by Gigabit-capable Passive Optical Networks according to the ITU-T G.984 specification. The power value may be expressed as an absolute power measure by the RxPower. The power value may also be expressed as a relative measure or a power loss by subtracting from the RxPower the power of the transmitted signal at the OLT 1.

The optical power RxPower received and measured at the ONTs 2 may be expressed as a function of a deterministic part and a random part according to the following equation Eq. 1:

$$RxPower(id, wavelength) = TxPower(id, wavelenght) -$$
$$\left[\Sigma_{splitter} IL(splitter) + \Sigma_{connector} IL(connector) +\right.$$
$$\left.\int fiberAtt(d, wavelength)dd\right] - \left[\Sigma_{splitter} \chi(splitter) +\right.$$
$$\left.\Sigma_{connector} \phi(connector) + \Sigma_{transceiver} \theta(transceiver, wavelength)\right] -$$
$$\eta_{impairements} \qquad\qquad (Eq.1)$$

whereby

*TxPower*(*id*, *wavelenght*) is the known transmission power in the OLT as a function of the signal wavelength and the identification or id of the ONT to which the signal was sent; and
*IL* is the known Insertion Loss respectively caused by the splitters and connectors in the respective optical link; and
*fiberAtt* is the known attenuation in the fibre cable for a certain signal wavelength specified for a unity of distance *d*; and
$\chi$, $\phi$, $\theta$ and $\eta$ are unknown random variables.

As an impairment or fault in an optical link will also cause a drop in the RxPower, it is the purpose to isolate and quantify the random contribution of the potential impairment $\eta_{impairements}$ and thereby diagnose an optical link as faulty.

If only identical links are considered, i.e., links with equal fibre length, same type of transceivers, same number and type of connectors and same number of splitters and splitter ratio, the difference between the received RxPower on different optical links will only be due to the random parts in Eq.1 and potential impairments. For example, in the PON 7 of Fig. 1 this would be the case when considering the optical links defined by the ONTs ONT11, ONT12, ONT13 and ONT14.

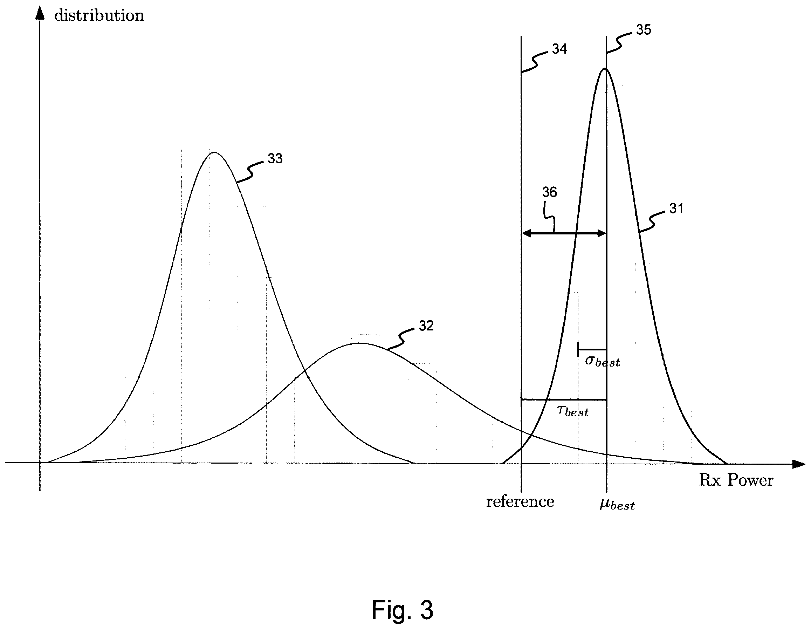

The device 8 then proceeds to step 22 where a subset of the RxPower values is identified that are indicative for a good performance of the respective optical links. Fig. 3 illustrates this by plotting the distribution of the RxPower measurements or samples on the Y-axis against the actual value of the RxPower on the X-axis. There, three subsets or clusters 31, 32 and 33 have been derived from the RxPower data set. The cluster 31 is identified as containing the RxPower values with the best performance, as the received signal power is the highest. In general, it is estimated if there are at least two sets of RxPower values, separate the data sets and identify the best ones, i.e., the one with the highest values in the case of absolute RxPower values. The power values of a cluster thus reflect fairly similar values that only differ from each other by the noise introduced by a splitter, connector or transceiver.

From the best cluster, a reference power value 34 is then derived in a next step 23. This reference power value will act as a minimum threshold in order to classify a received power value as good or as bad, i.e. received from a faulty optical link causing an insertion loss by an impairment on this link.

Therefore, in the next step 24, an optical link is diagnosed as faulty, i.e., having an impairment, if a power value of a signal received over this optical link in an ONT 2 is worse than the reference value. In the case of absolute RxPower values, an optical link is diagnosed as faulty if the RxPower value is below the reference power value 34. This step 24 may further be performed for every considered optical link.

Different statistical techniques are known in the art to recognize the different data sets and thus to obtain the best cluster 33 from the RxPower values. One of the techniques that may be used is for example an unsupervised machine learning technique and more particular a simplification of the Expectation-Maximization or EM algorithm.

In the simplified EM algorithm, in a first initialization step, the highest or maximum power value sample is identified and stored together with its accuracy. In a second step it is compared if the other power values, taking into account their respective accuracy, are similar to this highest value also taking into account its accuracy. In practice, there is a decision threshold which is the obtained maximum value minus its accuracy. If another data sample value plus its accuracy is above this threshold, it is considered as similar to the maximum one. If not, it is considered different. After comparing all power values in the data set with the maximum value in this way, a first classification can be made between similar values and different values. The third step is then the actual Expectation-Maximization step. The goal is to compute the statistical estimators, i.e. the max-likelihood or mean for the similar values as well as the total accuracy for this group of similar values in order to have a confidence value. This confidence value is then used again to derive a more precise estimation of the decision threshold for identifying the power values as similar or different. Then, all the power values are again compared to this decision threshold. What can happen is that some previous power values were miss-classified as different and can now join the group of similar data values. And the other way around, power values previously judged as similar can leave the group of similar power values because they are now considered as different. At each iteration of the third step, a refined set of power values may be obtained. And at every step new statistics, i.e.,

new max-likelihood or mean and new confidence interval, are derived. After a number of iterations, the max-likelihood value and confidence value will converge and, thus, there is no more difference between two consecutive iterations. The remaining set of similar values is then considered as the best cluster. The reference power value from step 23 is then the max-likelihood value 35 of this set minus the confidence value 36 of the set or cluster.

Regarding the statistical estimators, the different comparable - either precompensated or not - measurements of the power values (x1, x2, x3...) are biased by their respective splitter ratio accuracy errors ($X_1$, $X_2$, $X_3$ ...), their respective connector biases ($\phi_1$, $\phi_2$, $\phi_3$... and their respective transceiver measurement inaccuracies ($\theta_1$, $\theta_2$, $\theta_3$...). Each of these power value measurements (x1, x2, x3...) therefore consists in a sample of a random process, i.e., power value or RxPower, but also in a sample of each of the random variables, i.e., X, $\phi$ and $\theta$. As X, $\phi$ and $\theta$ act as noise, the mean of each of these random variable is zero. Therefore, they are defined by their deviation, e.g. in decibels or dB. From the random variable theory it can be obtained that, as the confidence interval is only dependent on the standard deviation and the amount of samples used for the estimation, the total inaccuracy gets lower by the use of larger amounts of samples. In other words, the more power values that are obtained from the ONTs, the more precise the reference power value will be and, thus, the smaller the confidence value will become. The max-likelihood power value 35 can therefore be obtained as the mean of the selected set of power values and the confidence value 36 as

$$confidence = \frac{\tau_{RxPower}}{\sqrt{n}} \qquad\qquad \text{(Eq. 2)}$$

whereby

$\tau_{RxPower}$ is the standard deviation of the samples in the selected set of power values; and
$n$ is the amount of samples in the selected set.

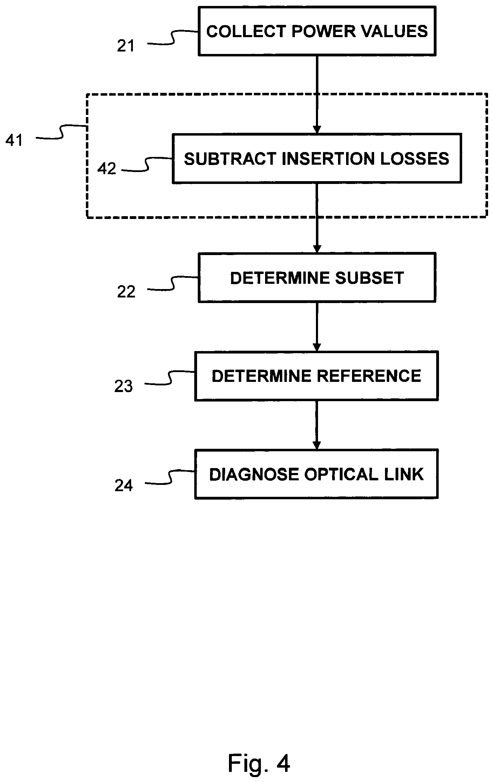

According to a further embodiment, non-identical links in the PON are considered to establish the reference power value 34. As non-identical links will exhibit different insertion losses, the received power values will not only differ by the random part of Eq. 1 but also by the actual difference in insertion losses caused by the difference in topology of the PON. Therefore, in a step 41 as shown in Fig. 4, an extra precompensation step is performed on the received power values in order to make the power values comparable. When departing from Eq. 1, a precompensated power value is derived from a received power value as follows:

$$RxPower_{Precompensated}(id, wavelength)$$
$$= RxPower(id, wavelength)$$
$$- \left[\sum_{splitter} IL(splitter) + \sum_{connector} IL(connector)\right.$$
$$\left. + \int fiberAtt(d, wavelength)dd\right]$$
$$= TxPower(id, wavelenght) - \left[\sum_{splitter} \chi(splitter) + \right.$$
$$\left. \sum_{connector} \phi(connector) + \sum_{transceiver} \theta(transceiver, wavelength)\right] -$$
$$\eta_{impairements} \qquad\qquad \text{(Eq.3)}$$

This way, the difference in topology by a different number of splitter or different splitter ratio is compensated by subtracting, in the step 42, the known insertion loss of the respective splitters in the optical link from the received power value. Also a difference in topology by a different length in optical fibre is compensated by subtracting the known insertion loss of the respective optical fibre from the received power value. And also the difference in topology by a different number or type of connectors is compensated by subtracting the known insertion losses of the respective connectors from the received power value. It should be noted that only the differences in topology of the considered optical links are to be compensated. For example, if all optical links comprise the same number of splitters and splitter ratios, it is not necessary to compensate the power values for the splitters. The insertion loss caused be splitter will then be the same for every considered optical link.

After the precompensation step 41 is performed, all precompensated power values are comparable, i.e. they only differ from each other by their random variables. This way, even more samples may be taken into account and the accuracy of the reference power value will improve.

According to a further embodiment, the embodiments above can also be used not only to diagnose an optical link as faulty, but also to diagnose a splitter as faulty, i.e. the impairment being a splitter. A splitter is then diagnosed as faulty if all power values measurement from ONTs 2 after a certain splitter are worse than the reference power value. For example, referring to the PON 7 of Fig. 1, the splitter 3 would be diagnosed as faulty if all power values of the ONTs ONT11, ONT12, ONT13 and ONT14 are worse than the reference power value.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A device (8) for diagnosing faults in a passive optical network or PON (7); said PON (7) connecting an optical line termination or OLT (1) with optical network terminals or ONTs (2); the device being configured to execute the following steps:

   - collecting (21) a plurality of power values indicative for an amount of signal power lost or received in respective optical links connecting said ONTs with said OLT;
   - marking (24) an optical link in said PON as faulty if a power value for said optical link is worse than a reference power value (34);

   further **characterized in that** the device is further configured to execute the following steps:

   - determining (22) a subset (31) of said power values indicative for a respective subset of said respective optical links providing a best performance in received or lost power;
   - determining (23) said reference power value (34) from said subset.

2. A device according to claim 1 being further configured to execute the following step before said determining:

   - precompensating (41) said power values for differences in topology between said respective optical links thereby obtaining precompensated power values for said respective optical links.

3. A device according to claim 2 whereby said precompensating comprises:

   - subtracting (42) from said power values insertion losses induced by said respective optical links.

4. A device according to claim 3 whereby said differences in topology comprise a difference in length of said respective optical links and whereby said subtracting comprises:

- subtracting from said power values attenuations in power caused by the length of said respective optical links.

5. A device according to claim 3 whereby said PON comprises splitters; and whereby said differences in topology comprises a difference in a number of said splitters or splitter ratios of said splitters within said respective optical links; and whereby said subtracting comprises:

- subtracting from said power values attenuations in power caused by said splitter ratios of said splitters in said respective optical links.

6. A device according to claim 3 whereby said respective optical links comprise connectors; and whereby said differences in topology comprises a difference an a number of said connectors and/or a type of said connecters; and whereby said subtracting comprises:

- subtracting from said power values attenuations in power caused by said numbers of said connectors and said type of said connectors in said respective optical links.

7. A device according to claim 1 whereby said determining a reference value comprises:

- calculating a maximum-likelihood value (35) of said subset of said power values minus a confidence value (36) for said maximum-likelihood value (35).

8. A device according to claim 5 further being configured to execute the following step:

- marking a splitter (3, 4, 5) in said optical link as faulty if first power values of said power values corresponding to first optical lines of said respective optical lines all comprising said splitter are worse than said reference power value.

9. A method for diagnosing faults in a passive optical network or PON (7); said PON (7) connecting an optical line termination or OLT (1) with optical network terminals or ONTs (2); said method further comprising:

- collecting (21) a plurality of power values indicative for an amount of signal power lost or received in respective optical links connecting said ONTs with said OLT;
- marking (24) an optical link in said PON as faulty if a power value for said optical link is worse than a reference power value;

further **characterized in that** said method further comprises:

- determining (22) a subset (31) of said power values indicative for a respective subset of said respective optical links providing a best performance in received or lost power;
- determining (23) said reference power value (34) from said subset.

10. A computer program product comprising computer-executable instructions for performing the method according to claim 9 when the program is run on a computer.

11. A computer readable storage medium comprising the computer program product according to claim 10.

12. A data processing system programmed for carrying out the method according to claim 9.

**Patentansprüche**

1. Vorrichtung (8) zum Diagnostizieren von Fehlern in einem passiven optischen Netzwerk oder PON (7); wobei das besagte PON (7) einen optischen Leitungsabschluss oder OLT (1) mit optischen Netzwerkendgeräten oder ONTs (2) verbindet; wobei die Vorrichtung konfiguriert ist, die folgenden Schritte auszuführen:

- Sammeln (21) einer Vielzahl von Leistungswerten, die bezeichnend sind für ein Maß einer Signalleistung, die in jeweiligen optischen Verbindungen, die die besagten ONTs mit dem besagten OLT verbinden, verloren oder empfangen wird;

- Markieren (24) einer optischen Verbindung in dem besagten PON als fehlerhaft, wenn ein Leistungswert für die besagte optische Verbindung schlechter ist als ein Referenzleistungswert (34);

weiterhin **dadurch gekennzeichnet, dass** die Vorrichtung weiterhin konfiguriert ist, die folgenden Schritte auszuführen:

- Bestimmen (22) eines Teilsatzes (31) von besagten Leistungswerten, die bezeichnend sind für einen jeweiligen Teilsatz von besagten jeweiligen optischen Verbindungen, die eine Bestleistung bei der empfangenen oder verlorenen Leistung bereitstellen;
- Bestimmen (23) des besagten Referenzleistungswertes (34) aus dem besagten Teilsatz.

2. Vorrichtung nach Anspruch 1, die weiterhin konfiguriert ist, den folgenden Schritt vor dem besagten Bestimmen auszuführen:

- Vorkompensieren (41) der besagten Leistungswerte aufgrund von Differenzen in der Topologie zwischen den besagten jeweiligen optischen Verbindungen, sodass vorkompensierte Leistungswerte für die besagten jeweiligen optischen Verbindungen erhalten werden.

3. Vorrichtung nach Anspruch 2, wobei das Vorkompensieren umfasst:

- Subtrahieren (42) von Einfügedämpfungen, die von den besagten jeweiligen optischen Verbindungen hervorgerufen werden, von den besagten Leistungswerten.

4. Vorrichtung nach Anspruch 3, wobei die besagten Differenzen in der Topologie eine Differenz in der Länge der besagten jeweiligen optischen Verbindungen umfassen und wobei das besagte Subtrahieren umfasst:

- Subtrahieren von Leistungsdämpfungen, die von der Länge der besagten jeweiligen optischen Verbindungen verursacht werden, von den besagten Leistungswerten.

5. Vorrichtung nach Anspruch 3, wobei das besagte PON Splitter umfasst; und wobei die besagten Differenzen in der Topologie eine Differenz in einer Anzahl der besagten Splitter oder Splitterverhältnissen der besagten Splitter innerhalb der besagten jeweiligen optischen Verbindungen umfassen; und wobei das besagte Subtrahieren umfasst:

- Subtrahieren von Leistungsdämpfungen, die von den besagten Splitterverhältnissen der besagten Splitter in den besagten jeweiligen optischen Verbindungen verursacht werden, von den besagten Leistungswerten.

6. Vorrichtung nach Anspruch 3, wobei die besagten jeweiligen optischen Verbindungen Anschlusselemente umfassen; und wobei die besagten Differenzen in der Topologie eine Differenz in einer Anzahl der besagten Anschlusselemente und/oder einer Art der besagten Anschlusselemente umfassen; und wobei das besagte Subtrahieren umfasst:

- Subtrahieren von Leistungsdämpfungen, die von der besagten Anzahl der besagten Anschlusselemente und der besagten Art der besagten Anschlusselemente in den besagten jeweiligen optischen Verbindungen verursacht werden, von den besagten Leistungswerten.

7. Vorrichtung nach Anspruch 1, wobei das besagte Bestimmen eines Referenzwertes umfasst:

- Berechnen eines Wertes (35) maximaler Wahrscheinlichkeit aus dem besagten Teilsatz von besagten Leistungswerten minus eines Vertrauenswertes (36) für den besagten Wert (35) maximaler Wahrscheinlichkeit.

8. Vorrichtung nach Anspruch 5, die weiterhin konfiguriert ist, den folgenden Schritt auszuführen:

- Markieren eines Splitters (3, 4, 5) in der besagten optischen Verbindung als fehlerhaft, wenn erste Leistungswerte der besagten Leistungswerte, die ersten optischen Leitungen der besagten jeweiligen optischen Leitungen entsprechen, die alle die besagten Splitter umfassen, schlechter sind als der besagte Referenzleistungswert.

9. Verfahren zum Diagnostizieren von Fehlern in einem passiven optischen Netzwerk oder PON (7); wobei das besagte PON (7) einen optischen Leitungsabschluss oder OLT (1) mit optischen Netzwerkendgeräten oder ONTs (2) verbindet; wobei das besagte Verfahren weiterhin umfasst:

- Sammeln (21) einer Vielzahl von Leistungswerten, die bezeichnend sind für ein Maß einer Signalleistung, die in jeweiligen optischen Verbindungen, die die besagten ONTs mit dem besagten OLT verbinden, verloren oder empfangen wird;
- Markieren (24) einer optischen Verbindung in dem besagten PON als fehlerhaft, wenn ein Leistungswert für die besagte optische Verbindung schlechter ist als ein Referenzleistungswert;

weiterhin **dadurch gekennzeichnet, dass** das besagte Verfahren weiterhin umfasst:

- Bestimmen (22) eines Teilsatzes (31) von besagten Leistungswerten, die bezeichnend sind für einen jeweiligen Teilsatz von besagten jeweiligen optischen Verbindungen, die eine Bestleistung bei der empfangenen oder verlorenen Leistung bereitstellen;
- Bestimmen (23) des besagten Referenzleistungswertes (34) aus dem besagten Teilsatz.

10. Computerprogrammprodukt, umfassend computerausführbare Anweisungen zum Durchführen des Verfahrens nach Anspruch 9, wenn das Programm auf einem Computer gestartet wird.

11. Computerlesbares Speichermedium, umfassend das Computerprogrammprodukt nach Anspruch 10.

12. Datenverarbeitungssystem, das zum Ausführen des Verfahrens nach Anspruch 9 programmiert ist.

## Revendications

1. Dispositif (8) de diagnostic de défaillances dans un réseau optique passif ou PON (7) ; ledit PON (7) reliant une terminaison de ligne optique ou OLT (1) à des terminaux de réseau optique ou ONT (2) ; le dispositif étant configuré pour exécuter les étapes suivantes :

   - collecter (21) une pluralité de valeurs de puissance indiquant une quantité de puissance de signal perdue ou reçue dans des liaisons optiques respectives reliant lesdits ONT à ladite OLT ;
   - marquer (24) une liaison optique dans ledit PON comme étant défaillante si une valeur de puissance pour ladite liaison optique est pire qu'une valeur de puissance de référence (34) ;

   **caractérisé en outre en ce que** le dispositif est configuré en outre pour exécuter les étapes suivantes :

   - déterminer (22) un sous-ensemble (31) desdites valeurs de puissance indiquant un sous-ensemble respectif desdites liaisons optiques respectives permettant ainsi une meilleure performance de la puissance reçue ou perdue ;
   - déterminer (23) ladite valeur de puissance de référence (34) à partir dudit sous-ensemble.

2. Dispositif selon la revendication 1 étant configuré en outre pour exécuter l'étape suivante avant ladite détermination :

   - pré-compenser (41) lesdites valeurs de puissance pour des différences de topologie entre lesdites liaisons optiques respectives obtenant ainsi des valeurs de puissance pré-compensées pour lesdites liaisons optiques respectives.

3. Dispositif selon la revendication 2 ladite pré-compensation comprenant l'étape suivante :

   - soustraire (42) desdites valeurs de puissance des affaiblissements d'insertion induits par lesdites liaisons optiques respectives.

4. Dispositif selon la revendication 3 lesdites différences de topologie comprenant une différence de longueur desdites liaisons optiques respectives et ladite soustraction comprenant l'étape suivante :

   - soustraire desdites valeurs de puissance des atténuations de puissance dues à la longueur desdites liaisons optiques respectives.

5. Dispositif selon la revendication 3, ledit PON comprenant des diviseurs ; et lesdites différences de topologie comprenant une différence d'un nombre desdits diviseurs ou rapports de division desdits diviseurs dans lesdites liaisons optiques respectives ; et ladite soustraction comprenant l'étape suivante :

- soustraire desdites valeurs de puissance des atténuations de puissance dues auxdits rapports de division desdits diviseurs dans lesdites liaisons optiques respectives.

6. Dispositif selon la revendication 3, lesdites liaisons optiques respectives comprenant des connecteurs ; et lesdites différences de topologie comprenant une différence d'un nombre desdits connecteurs et/ou d'un type desdits connecteurs ; et ladite soustraction comprenant l'étape suivante :

- soustraire desdites valeurs de puissance des atténuations de puissance dues auxdits nombres desdits connecteurs et audit type desdits connecteurs dans lesdites liaisons optiques respectives.

7. Dispositif selon la revendication 1, ladite détermination d'une valeur de référence comprenant l'étape suivante :

- calculer une valeur de probabilité maximale (35) dudit sous-ensemble desdites valeurs de puissance moins une valeur de confiance (36) pour ladite valeur de probabilité maximale (35).

8. Dispositif selon la revendication 5 étant configuré en outre pour exécuter l'étape suivante :

- marquer un diviseur (3, 4, 5) dans ladite liaison optique comme défaillant si des premières valeurs de puissance desdites valeurs de puissance correspondant à des premières lignes optiques desdites lignes optiques respectives comprenant toutes ledit diviseur sont pires que ladite valeur de puissance de référence.

9. Procédé de diagnostic de défaillances dans un réseau optique passif ou PON (7) ; ledit PON (7) reliant une terminaison de ligne optique ou OLT (1) à des terminaux de réseau optique ou ONT (2) ; ledit procédé comprenant en outre les étapes suivantes :

- collecter (21) une pluralité de valeurs de puissance indiquant une quantité de puissance de signal perdue ou reçue dans des liaisons optiques respectives reliant lesdits ONT à ladite OLT ;
- marquer (24) une liaison optique dans ledit PON comme étant défaillante si une valeur de puissance pour ladite liaison optique est pire qu'une valeur de puissance de référence ;

**caractérisé en outre en ce que** ledit procédé comprend en outre les étapes suivantes :

- déterminer (22) un sous-ensemble (31) desdites valeurs de puissance indiquant un sous-ensemble respectif desdites liaisons optiques respectives permettant ainsi une meilleure performance de la puissance reçue ou perdue ;
- déterminer (23) ladite valeur de puissance de référence (34) à partir dudit sous-ensemble.

10. Produit de programme informatique comprenant des instructions exécutables par un ordinateur pour réaliser le procédé selon la revendication 9 lorsque le programme est exécuté sur un ordinateur.

11. Support de stockage lisible par ordinateur comprenant le produit de programme informatique selon la revendication 10.

12. Système de traitement de données programmé pour exécuter le procédé selon la revendication 9.

Fig. 1

Fig. 2

Fig. 3

Fig. 4

**EP 2 903 182 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090129773 A1